# EUROPEAN PATENT APPLICATION

(11) **EP 3 648 288 A1**
(43) Date of publication of application: **06.05.2020**
(21) Application number: 18824294.5
(22) Date of filing: 28.06.2018
(51) Int. Cl.: H02J 7/00

(54) **POWER MANAGEMENT SYSTEM FOR MULTIPLE BATTERIES**

(30) Priority: 30.06.2017 CN 201710522942
(71) Applicant: Team Young Technology Co., Ltd., 32070 Taoyuan City (TW)
(72) Inventor: LIN, Tz-Min, Taoyuan City 32070 Taiwan (TW)
(74) Representative: dompatent von Kreisler Selting Werner - Partnerschaft von Patent- und Rechtsanwälten mbB
(86) International application number: PCT/CN2018/093364
(87) International publication number: WO 2019/001513

(57) **Abstract**

A multicell battery management system is disclosed. The multicell battery management system includes N batteries and a power control device, wherein N is a positive integer. The power control device forms a charging/discharging circuit using (N-1) batteries and respectively inspects the storage capacity of each of the N batteries. The battery not allocated to the charging/discharging circuit is defined as an offline battery. When the comparison between the storage capacity of the (N-1) batteries and the storage capacity of the offline battery respectively satisfies a switching condition, the power control device selects one of the (N-1) batteries to be disconnected from the charging/discharging circuit and used as a new offline battery, and the original offline battery is added to the charging/discharging circuit. Thus, the multicell battery management system not only effectively increases battery efficiency, but also prolongs usage time and battery life.

## Description

### BACKGROUND OF THE INVENTION

### Field of the Invention

The invention relates in general to a multicell battery device, and more particularly to a multicell battery management system.

### Description of the Related Art

Battery has been widely used in various electronic products, and normally adopts a multicell battery structure. That is, multiple batteries are connected in parallel or in series to provide necessary power to the electronic products.

In a conventional multicell battery structure, all batteries are charged or discharged at the same time. Since all the batteries are connected in parallel or in series, when one of the batteries is abnormal (for example, the battery has a voltage being too small or too large, or the cell is damaged), the multicell battery will malfunction or will be determined as having functional failure.

Moreover, in order to balance the output voltage of the multicell battery, normally an extra balance circuit is needed to stabilize the output voltage. Since the estimation of the storage capacity of the multicell battery is not performed in an offline manner, the estimation is likely to be influenced by the internal resistance of the battery, and has a lower accuracy.

### SUMMARY OF THE INVENTION

The invention is directed to a multicell battery management system capable of increasing the usage time and lifespan of the batteries, reducing the space and cost of the conventional balance circuit and further balancing the charging and discharging efficiency of the batteries.

According to one embodiment of the present invention, a multicell battery management system is provided. The multicell battery management system includes N batteries and a power control device, wherein N is a positive integer. The power control device forms a charging/discharging circuit using (N-1) batteries and respectively inspects the storage capacity of each of the N batteries. A battery not allocated to the charging/discharging circuit is defined as an offline battery. When a result of a comparison between the storage capacity of each of the (N-1) batteries and the storage capacity of the offline battery respectively satisfies a switching condition, the power control device selects one of the (N-1) batteries to be disconnected from the charging/discharging circuit and used as a new offline battery, and the original offline battery is added to the charging/discharging circuit.

Thus, the multicell battery management system of the invention can allocate power supply with multiple batteries, and can further enable each battery to be stably charged or discharged to achieve storage capacity balance among the batteries through the control of the power control device.

The above and other aspects of the invention will become better understood with regard to the following detailed description of the preferred but non-limiting embodiment (s). The following description is made with reference to the accompanying drawings.

### BRIEF DESCRIPTION OF THE DRAWINGS

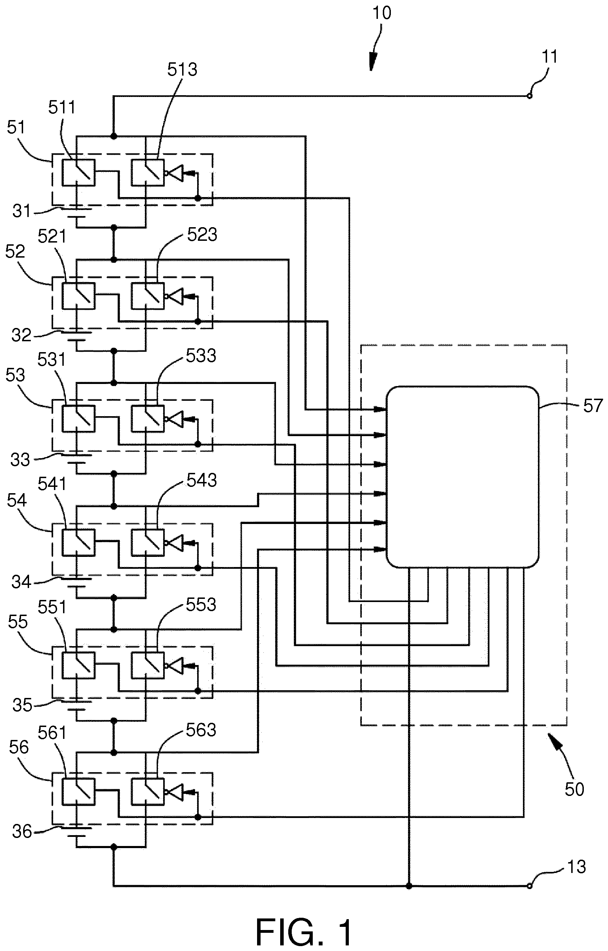

FIG. 1 is a composition block diagram of a multicell battery management system of the invention.

### DETAILED DESCRIPTION OF THE INVENTION

The components and expected effects of the multicell battery management system of the invention are disclosed below in a number of exemplary embodiments with accompanying drawings. In each drawing, the components, size and shape of the multicell battery management system are for explaining the technical features of the invention, not for limiting the scope of protection of the invention.

Referring to FIG. 1, a composition block diagram of a multicell battery management system of the invention is shown. The multicell battery management system of the invention is used in a power system. The power system can be realized by various battery powered devices, such as portable computers, mobile phones, electric vehicles, electrical scooters, or portable home appliances.

As indicated in FIG. 1, the multicell battery management system 10 is connected to the said power system through two ends 11 and 13, and includes 6 batteries 31-36 and a power control device 50. The power control device 50 selects 5 batteries 31-35 from the 6 batteries 31-36 to form a charging/discharging circuit and respectively inspects the storage capacity of each of the 6 batteries 31-36, and the battery 36 not allocated to the charging/discharging circuit is defined as an offline battery.

It should be noted that, the total voltage of the batteries configured in a conventional power system is equivalent to the required voltage of the power system, that is, the conventional power system does not have extra offline (idled) battery, but the multicell battery management system of the invention further includes an extra battery in addition to the batteries configured according to the required electricity of the power system. In the present embodiment, N is exemplified by 6, and (N-1) is equivalent to 5. That is, the multicell battery management system includes 6 batteries, and 5 batteries form a charging/discharging circuit which provides required electricity to the multicell battery system, and the offline battery is on standby and waiting to be allocated.

In the present embodiment, the quantity of offline battery is one. However, in practice, the quantity of offline battery can be two or more than two. When the quantity of offline battery is designed to be two or more than two, anyone having ordinary skill in the technology field, through the explanation of the invention, will understand that the total quantity of batteries will increase and the quantity of batteries of the charging/discharging circuit should be (N-2) or (N-X), and X represents the quantity of offline batteries being more than two.

When a result of a comparison between the storage capacity of the 5 batteries 31-35 and the storage capacity of the offline battery respectively satisfies a switching condition, the power control device 50 selects one of the 5 batteries 31-35 to be disconnected from the charging/discharging circuit and adds the offline battery 36 to the charging/discharging circuit, wherein the disconnected battery becomes a new offline battery.

Since the power control device can be used in the charging application and the discharging application, the switching condition in the charging application is different from that in the discharging application.

Based on the Le Chatelier's principle, the offline batteries on standby slightly increase their voltages. Measuring a battery after it is disconnected from the charging/discharging circuit (becomes a new offline battery) can avoid the internal resistance of the battery causing measurement error of voltage, such that the accuracy in estimating the storage capacity of the offline battery can be increased.

Regardless of the charging application or the discharging application, when something goes wrong with any of the 6 batteries (for example, the voltage is too high or too low), the power control device 50 can inspect battery abnormality and make the abnormal battery become an offline battery, such that the safety of the multicell battery can be increased.

Continue to refer to FIG. 1. The power control device 50 includes 6 switch circuits 51-56 and a controller 57. The quantity of switch circuits 51-56 is equivalent to the quantity of batteries, that is, both N and M defined in the claims are equivalent to 6. The six switch circuits 51-56 connect the six batteries 31-36 in a one-to-one manner. The controller 57 connects the six switch circuits 51-56 and further controls the six switch circuits 51-56 to form a charging/discharging circuit. In other words, the controller 57 has multiple connection ports for connecting the six switch circuits 51-56. Anyone having ordinary skill in the technology field of the invention can understand the design of the controller 57 having multiple connection ports, and therefore the said design is not repeated here.

Each of the switch circuits 51-56 includes one of series switches 511-561 and one of bypass switches 513-563. The series switches 511-561 connect the batteries 31-36 in series. The bypass switches 513-563 connects the series switches 511-561 and the batteries 31-36, and forms a parallel connection with the series switches 511-561 and the batteries 31-36.

Both N and M represent a specific value. Anyone having ordinary skill in the technology field of the invention can understand that the said value can be changed. The series switch and bypass switch of the switch circuit can be realized by transistors, diodes or circuits formed thereof.

The charging/discharging circuit is formed by the controller controlling the switch circuits. For example, when the battery of the charging/discharging circuit is switched to a new offline battery and the original offline battery is added to the charging/discharging circuit, the controller can disconnect the series switch of the switch circuit which connects the new offline battery and conduct the bypass switch, such that the new offline battery will not be charged or discharged. The controller can further conduct the series switch of the switch circuit, which connects the original offline battery, and disconnect the bypass switch, such that the original offline battery can be added to the charging/discharging circuit to perform charging or discharging.

The composition of the multicell battery management system of the invention is disclosed above. Explanations of the discharging application and the charging application, and the operation of the controller are disclosed below. The charging/discharging circuit is exemplified by a discharging circuit in the discharging application and is exemplified by a charging circuit in the charging application. In other words, the charging/discharging circuit can be used in either the charging application or the discharging application, but cannot be used in both the charging application and the discharging application at the same time.

In the discharging application, as indicated Table 1, the batteries 1-6 indicate that there are six batteries, that is, the power control device has six switch circuits. The storage capacity error is the difference between the largest storage capacity and the smallest storage capacity of the batteries 1-6, and the storage capacity state can be obtained through dynamic inspection. The offline battery is marked by underlining and boldfacing the battery storage capacity.

Initially, the storage capacities of the batteries 1-6 differ with each other significantly, and this is the actual situation of the batteries. The controller inspects the storage capacity of each of the batteries 1-6, that is, the cell voltage of each of the batteries 1-6. In the present embodiment, when measuring the voltages of all batteries, the controller disconnects the bypass switches of all switch circuits but conducts the series switches. Then, the controller selects 5 batteries from the batteries 1-6 to provide power. In the present embodiment, initially, the batteries 1-5 are used as a discharging circuit, and the battery 6 is used as an offline battery. That is, the series switches of the switch circuits, which connect the batteries 1-5, are conducted, and the bypass switches are disconnected, the battery 6 is on standby, the series switch of the switch circuit, which connects the battery 6, is disconnected, and the bypass switch is conducted.

Then, the controller inspects the storage capacity of each of the batteries 1-5 of the discharging circuit and the storage capacity of the offline battery 6 and respectively compares the storage capacity of each of the batteries 1-5 with the storage capacity of the offline battery 6. When the result of the comparison between the storage capacity of each of the batteries 1-5 of the discharging circuit and the storage capacity of the offline battery 6 satisfies a switching condition, the storage capacity of the battery 5 (smallest storage capacity) is smaller than the storage capacity of the offline battery 6. Since the difference between the smallest storage capacity and the storage capacity of the offline battery 6 reaches 0.1Ah (predetermined value), the controller determines that the result of the comparison satisfies the switching condition. The controller controls the switching of the battery 5 and makes the battery 5 become a new offline battery, such that the battery 5 is temporarily on standby. Meanwhile, the controller adds the battery 6 (the original offline battery) to the discharging circuit.

In the present embodiment, the predetermined value is set as 0.1Ah in the early stage and is set as 0.2Ah in the late stage. Anyone having ordinary skill in the technology field of the invention can understand that the predetermined value can remain the same or can be gradually adjusted, and is not subjected to specific restrictions.

Thus, the controller continues to perform the above process to determine whether the storage capacity of each battery being discharged is smaller than the offline battery and determine whether the difference between the storage capacity of the offline battery and the smallest storage capacity satisfies the predetermined value. If the difference satisfies the predetermined value, then the battery having the smallest storage capacity is switched as a new offline battery, meanwhile, the controller controls the switch circuit connecting to the original offline battery to add the original offline battery to the discharging circuit, such that the power supply can be stabilized and the discharging voltage of each battery can be basically balanced. If the difference does not match the predetermined value, the controller does not perform any switching.

As indicated in Table 1, each of the batteries 1-6 can become an offline battery (the storage capacity is underlined and boldfaced), such that each battery can be fully discharged.

As indicated in Table 1, at the initial value, the batteries 1-6 have large storage capacity errors, which gradually reduce after continuous operation of the discharging application. This also indicates that the discharging application becomes more balanced. When the controller inspects that two or more than two batteries of the discharging circuit match the switching condition, the controller selects one of the batteries as a new offline battery.

**Table 1**

| Storage capacity error | Battery 1 | Battery 2 | Battery 3 | Battery 4 | Battery 5 | Battery 6 |
|---|---|---|---|---|---|---|
| Initial value (Ah) | 4.1 | 4 | 3.9 | 3.8 | 3.5 | **3.4** |
| 0.6Ah | 3.9 | 3.8 | 3.7 | 3.6 | **3.3** | 3.4 |
| 0.5Ah | 3.7 | 3.6 | 3.5 | 3.4 | 3.3 | **3.2** |
| 0.4Ah | 3.5 | 3.4 | 3.3 | 3.2 | **3.1** | 3.2 |
| 0.3Ah | 3.3 | 3.2 | 3.1 | 3.0 | 3.1 | **3.0** |
| 0.3Ah | 3.1 | 3.0 | 2.9 | **2.8** | 2.9 | 3.0 |
| 0.2Ah | 2.9 | 2.8 | 2.7 | 2.8 | **2.7** | 2.8 |
| 0.2Ah | 2.7 | 2.6 | **2.5** | 2.6 | 2.7 | 2.6 |
| 0.1Ah | 2.5 | 2.4 | 2.5 | 2.4 | 2.5 | **2.4** |
| 0.2Ah | 2.3 | 2.2 | 2.3 | **2.2** | 2.3 | 2.4 |
| 0.2Ah | 2.1 | **2.0** | 2.1 | 2.2 | 2.1 | 2.2 |
| 0.1Ah | 1.9 | 2.0 | 1.9 | 2 | **1.9** | 1.8 |
| 0.2Ah | 1.7 | 1.8 | **1.7** | 1.8 | 1.9 | 1.8 |
| 0.2Ah | **1.5** | 1.6 | 1.7 | 1.6 | 1.7 | 1.6 |

The operation and logic judgment of the charging application is basically similar to that of the discharging application except that in the charging application, the storage capacity of the battery is gradually increased and the switching condition for selecting a battery as a new offline battery is: the largest storage capacity among the batteries of the (N-1) charging circuit exceeds the storage capacity of the offline battery and the difference between the largest storage capacity and the storage capacity of the offline battery satisfies a predetermined value. Thus, in the charging application, the charging voltage of the N batteries can be stably increased and can ultimately achieve a balanced state.

Thus, through the switching of the power control device, the multicell battery management system of the invention can make each battery work under a stable condition to prolong the usage time of each battery and balance the charging and discharging storage capacity of each battery. Particularly, the offline battery cannot be used in the charging or discharging application unless the offline battery has restored normal storage capacity, such that battery safety can be increased.

In the above embodiments, the switching condition has two criteria regardless of the charging application or the discharging application. However, in practice, the switching condition can be set as: when the largest storage capacity is larger than the storage capacity of the offline battery during the charging application, or when the smallest storage capacity is smaller than the storage capacity of the offline battery during the discharging application, and does not have to match both criteria.

Lastly, the components of the multicell battery management system of the invention disclosed in above embodiments are for exemplary and explanatory purpose only, not for limiting the scope or protection of the invention, and other substitutions or modifications of equivalent components are still within in the scope of protection of the invention.

### Industrial Application:

In comparison to the existing technology, the multicell battery management system of the invention can allocate power supply using multiple batteries, and can further enable each battery to be stably charged or discharged through the control of the power control device and make the storage capacity of each battery achieve balance.

While the invention has been described by way of example and in terms of the preferred embodiment (s), it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A multicell battery management system, used in a charging/discharging system with N batteries, N is a positive integer, and **characterized in that** the multicell battery management system comprises:
a plurality of switch circuits (51-56) configured to form a charging/discharging circuit using (N-X) of the N batteries, wherein X is a positive integer, and the remaining X batteries are disconnected from the charging/discharging circuit and used as offline batteries; and
a controller (57) configured to inspect electrical property of each battery and respectively compare the (N-X) batteries with the X offline batteries, wherein X batteries matching a switching condition are disconnected from the charging/discharging circuit and used as new offline batteries and the original X offline batteries are further added to the charging/discharging circuit, such that when the multicell battery management system operates, the (N-X) of the N batteries remain in the charging/discharging circuit.

2. The multicell battery management system according to claim 1, wherein the pluarity of switch circuits (51-56) comprise M switch circuits, wherein M is a positive integer equivalent to N, the M switch circuits connect the N batteries in a one-to-one manner, and the controller (57) connects and controls the M switch circuits to form the charging/discharging circuit.

3. The multicell battery management system according to claim 2, wherein each of the switch circuits comprises a series switch (511-561) and a bypass switch (513-563), wherein the series switch (511-561) connects the batteries in series, and the bypass switch (513-563) connects the series switch (511-561) and the battery and forms a parallel connection with the series switch (511-561) and the battery.

4. The multicell battery management system according to claim 1, wherein when the batteries are being discharged, the switching condition is: the X batteries having smallest storage capacities among the (N-X) batteries have a storage capacity smaller than a storage capacity of the X offline batteries.

5. The multicell battery management system according to claim 4, wherein the switching condition further comprises a difference between the storage capacity of the X batteries among the (N-X) batteries and the storage capacity of the X offline batteries satisfies a predetermined value.

6. The multicell battery management system according to claim 1, wherein when the batteries are being charged, the switching condition is: the X batteries having largest capacities among (N-X) batteries have a storage capacity larger than a storage capacity of the X offline batteries.

7. The multicell battery management system according to claim 6, wherein the switching condition further comprises: a difference between the storage capacity of the X batteries among the (N-X) batteries and the storage capacity of the X offline batteries satisfies a predetermined value.

8. The multicell battery management system according to claim 1, wherein when the batteries are being discharged, the switching condition is: the X batteries having smallest voltages among the (N-X) batteries have a voltage smaller than a voltage of the X offline batteries.

9. The multicell battery management system according to claim 1, wherein when the batteries are being charged, the switching condition is: the X batteries having largest voltages among the (N-X) batteries have a voltage larger than a voltage of the X offline batteries.

10. A multicell battery management system, **characterized in that** the multicell battery management system comprises:
N batteries, wherein N is a positive integer; and
the plurality of switch circuits (51-56) and the controller (57) according to claim 1.
